(19) Europäisches Patentamt
European Patent Office
Office européen des brevets

(11) **EP 3 383 624 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **16816282.4**

(22) Anmeldetag: **20.12.2016**

(51) Int Cl.:
*B29C 64/153* (2017.01)   *B29C 64/393* (2017.01)
*B33Y 50/02* (2015.01)   *B33Y 40/00* (2020.01)

(86) Internationale Anmeldenummer:
**PCT/EP2016/081918**

(87) Internationale Veröffentlichungsnummer:
**WO 2017/118569 (13.07.2017 Gazette 2017/28)**

(54) **VERFAHREN ZUM KALIBRIEREN EINER VORRICHTUNG ZUM HERSTELLEN EINES DREIDIMENSIONALEN OBJEKTS**

METHOD FOR CALIBRATING A DEVICE FOR PRODUCING A THREE-DIMENSIONAL OBJECT

PROCÉDÉ D'ÉTALONNAGE D'UN DISPOSITIF DE FABRICATION D'UN OBJET TRIDIMENSIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.01.2016 DE 102016200043**

(43) Veröffentlichungstag der Anmeldung:
**10.10.2018 Patentblatt 2018/41**

(60) Teilanmeldung:
**20198574.4**

(73) Patentinhaber: **EOS GmbH Electro Optical Systems**
**82152 Krailling (DE)**

(72) Erfinder:
• **DOMRÖSE, Robert Achim**
  **82110 Germering (DE)**
• **WOLF, Dominik**
  **80469 München (DE)**
• **GÖTH, Michael**
  **81677 München (DE)**
• **SCHMID, Ulrich**
  **86911 Dießen am Ammersee (DE)**
• **MITTERMÜLLER, Maximilian**
  **80687 München (DE)**

(74) Vertreter: **Prüfer & Partner mbB**
**Patentanwälte · Rechtsanwälte**
**Sohnckestraße 12**
**81479 München (DE)**

(56) Entgegenhaltungen:
**WO-A2-2015/040433     DE-A1-102013 208 651
US-A1- 2009 060 386**

**Beschreibung**

Die Erfindung bezieht sich auf ein Verfahren zum Kalibrieren einer Vorrichtung zum Herstellen eines dreidimensionalen Objekts durch schichtweises Verfestigen von Aufbaumaterial an den dem Querschnitt des herzustellenden Objekts in einer jeweiligen Schicht entsprechenden Stellen sowie auf eine derartige Vorrichtung, die das Verfahren durchführt.

Vorrichtungen zum Herstellen eines dreidimensionalen Objekts durch schichtweises selektives Verfestigen von Aufbaumaterial mittels elektromagnetischer Strahlung und/oder Teilchenstrahlung und entsprechende Verfahren werden beispielsweise zum Rapid Prototyping, Rapid Tooling, Rapid Manufacturing bzw. Additive Manufacturing verwendet. Ein Beispiel eines solchen Verfahrens, das unter dem Namen "Selektives Lasersintern" oder unter dem Namen "selektives Laserschmelzen" bekannt ist, sowie eine zugehörige Vorrichtung zur Durchführung des Verfahrens sind in der Druckschrift DE 195 14 740 C1 beschrieben.

Ein Verfahren zum Kalibrieren einer Vorrichtung zum Herstellen eines dreidimensionalen Objekts ist aus der DE 199 18 613 A1 bekannt, wobei das Verfahren nur für einen Laserstrahl ausgelegt ist. Das Verfahren ist dabei vor dem eigentlichen Bauprozess durchzuführen.

Ferner ist bekannt, innerhalb einer derartigen Vorrichtung mehrere Laserstrahlen zu verwenden, denen jeweils ein Teilbereich des Baufeldes zugeordnet ist, wobei die Teilbereiche einander teilweise überlappen. Ein Verfahren zum automatischen Kalibrieren einer derartigen Vorrichtung, welche mehrere Laser aufweist, ist aus der Druckschrift DE 10 2013 208 651 A1 bekannt. Dabei wird die Abweichung zwischen Testmustern bzw. die Abweichung zwischen Test- und Referenzmustern bestimmt und so verändert, dass ein Soll-Wert unterschritten wird. Test- und Referenzmuster können dabei Punktmuster oder Gittermuster sein.

WO 2015/040433 A2 beschreibt eine Vorrichtung zum Herstellen eines dreidimensionalen Objekts durch schichtweises selektives Verfestigen eines Aufbaumaterials. Zum Kalibrieren der Vorrichtung werden auf einer Platte Lasermarkierungen erzeugt und ein Bild dieser Markierungen mittels einer Kamera erfasst. Die tatsächlichen Positionen der Markierungen in dem Bild werden dann mit Soll-Positionen verglichen.

Nachteilig an den bekannten Kalibrierverfahren ist deren potenziell begrenzte Genauigkeit.

Eine Aufgabe der Erfindung besteht darin, ein verbessertes Verfahren zum Kalibrieren einer Vorrichtung zum Herstellen eines dreidimensionalen Objekts durch schichtweises selektives Verfestigen von Aufbaumaterial sowie eine Vorrichtung zum Durchführen eines verbesserten Verfahrens bereitzustellen.

Im Rahmen der Erfindung (ebenso wie der obigen Aussagen) wird der Begriff des Kalibrierens bzw. der Kalibrierung im erweiterten, nämlich umgangssprachlichen Sinne verstanden. Dies bedeutet, dass es sich dabei nicht (zwangsläufig) um die Genauigkeitsermittlung eines Messmittels handeln muss, sondern dass es vielmehr um die Einstellung eines ersten technischen Mittels einer Vorrichtung (hier der Vorrichtung zum Herstellen eines dreidimensionalen Objekts) relativ zu einem zweiten technischen Mittel handelt, insbesondere auf deren Positionierung und/oder Ausrichtung zueinander. Man könnte also beim Begriff "Kalibrieren/Kalibrierung" präziser auch von einem "Prüf- und/oder Justiervorgang" sprechen.

Die Aufgabe wird gelöst durch ein Verfahren gemäß Anspruch 1 und eine Vorrichtung gemäß Anspruch 12. Weiterbildungen der Erfindung sind jeweils in den Unteransprüchen angegeben, wobei die in den jeweiligen Unteransprüchen zu den einzelnen Anspruchskategorien genannten Merkmale auch als Weiterbildung aller anderen Anspruchskategorien verstanden werden können.

Bei dem erfindungsgemäßen Verfahren handelt es sich um ein Verfahren zum Kalibrieren einer Vorrichtung zum Herstellen eines dreidimensionalen Objekts durch schichtweises Verfestigen von Aufbaumaterial an den dem Querschnitt des herzustellenden Objekts in einer jeweiligen Schicht entsprechenden Stellen mit einem Bauraum, in dem ein Baufeld vorgesehen ist und in dem das Objekt durch selektives Verfestigen des Aufbaumaterials schichtweise aufzubauen ist, wobei das Baufeld wenigstens einen ersten Teilbereich und einen zweiten Teilbereich, die in einer Überlappungszone überlappen, aufweist, und einer Verfestigungseinrichtung zum Ausstrahlen von Strahlen elektromagnetischer Strahlung oder von Teilchenstrahlen auf selektive Stellen des Baufeldes. Das Verfahren beinhaltet den Schritt des Erzeugens eines im Wesentlichen periodischen ersten Modulationsmusters in einer Schicht des Aufbaumaterials oder auf einem Target in einem ersten Teilbereich des Baufeldes. Das Verfahren beinhaltet den Schritt des Erzeugens eines im Wesentlichen periodischen zweiten Modulationsmusters in einer Schicht des Aufbaumaterials oder auf einem Target in einem zweiten Teilbereich des Baufeldes. Das erste Modulationsmuster und das zweite Modulationsmuster bilden in der Überlappungszone ein im Wesentlichen periodisches Überlagerungsmuster aus. Die Periode des Überlagerungsmusters ist größer als die Periode des ersten Modulationsmusters und die Periode des zweiten Modulationsmusters. Das Verfahren beinhaltet den Schritt des Erfassens des Überlagerungsmusters. Das Verfahren beinhaltet den Schritt des Bestimmens der Abweichung der Lage des Überlagerungsmusters auf dem Baufeld von einer Referenzlage. Dadurch wird beispielsweise ein Verfahren zur Verfügung gestellt, das ein Kalibrieren mit großer Genauigkeit gestattet.

Mit dem erfindungsgemäßen Verfahren wird die Herstellung eines dreidimensionalen Objekts mit hoher (erhöhter) Maßhaltigkeit ermöglicht. Außerdem gestattet das erfindungsgemäße Verfahren die Herstellung sehr filigraner dreidimensionaler Objekte, da die für die Verfestigung von Aufbaumaterial zur Herstellung feingliedriger Strukturen erforderliche Präzision erreicht wird.

Vorzugsweise werden als im Wesentlichen periodische Modulationsmuster Linienmuster, Gittermuster oder Punktmuster erzeugt. Dadurch lassen sich beispielsweise auf relativ einfache Weise im Wesentlichen periodische Modulationsmuster erzeugen.

Vorzugsweise wird die Referenzlage durch mindestens eine Referenzmarkierung auf dem Baufeld festgelegt, wobei die mindestens eine Referenzmarkierung in einer Schicht des Aufbaumaterials oder auf einem Target von der Verfestigungseinrichtung erzeugt wird. Dadurch wird es beispielsweise ermöglicht, die Referenzlage gemeinsam mit der Erfassung des Überlagerungsmusters zu bestimmen.

Vorzugsweise strahlt die Verfestigungseinrichtung Strahlen elektromagnetischer Strahlung, insbesondere Laserstrahlung, aus, wobei verschiedene Strahlen von verschiedenen Strahlungsquellen ausgestrahlt werden oder durch Strahlteilung aus der von einer Strahlungsquelle ausgestrahlten Strahlung erzeugt werden. Ein Strahl elektromagnetischer Strahlung ist beispielsweise mit geringerem apparativem Aufwand herzustellen als ein Teilchenstrahl. Mittels eines von einer Laserquelle ausgestrahlten Strahls lässt sich beispielsweise das An- oder Aufschmelzen von Aufbaumaterial einfacher und exakter kontrollieren als bei Verwendung elektromagnetischer Strahlung aus einer anderen Strahlungsquelle.

Vorzugsweise wird die Lage des ersten Modulationsmusters und/oder des zweiten Modulationsmusters auf dem Baufeld derart verändert, dass die Abweichung der Lage des Überlagerungsmusters auf dem Baufeld von einer Referenzlage höchstens einen Soll-Wert aufweist. Dadurch können beispielsweise auftretende Abweichungen in einer bestimmten Koordinate spezifisch korrigiert werden.

Das Bestimmen der Abweichung der Lage des Überlagerungsmusters auf dem Baufeld von der Referenzlage umfasst bevorzugt ein Bestimmen eines Versatzes und/oder einer Drehung. Weiter bevorzugt erfolgt auf Basis der Bestimmung des Versatzes und/oder der Drehung ein Verändern der Lage des ersten Modulationsmusters und/oder zweiten Modulationsmusters, also ein Verändern des Versatzes und/oder der Drehung. Dadurch können beispielsweise verschiedenartige Abweichungen erkannt und gegebenenfalls korrigiert werden.

Vorzugsweise wird das erfindungsgemäße Verfahren vor dem Herstellen eines dreidimensionalen Objekts und/oder während des Herstellens eines dreidimensionalen Objekts und/oder nach dem Herstellen eines dreidimensionalen Objekts durchgeführt. Damit kann beispielsweise überprüft werden, ob Einstellungen einer Vorrichtung zum selektiven Lasersintern oder Laserschmelzen während des Herstellungsprozesses eine Drift aufweisen.

Vorzugsweise umfasst die Bestimmung der Abweichung der Lage des Überlagerungsmusters auf dem Baufeld von der Referenzlage eine automatische Erfassung, insbesondere eine sensorische Erfassung mit einer Erfassungseinrichtung, die mindestens einen Strahlungsleiter und einen Strahlungssensor umfasst. Dadurch wird beispielsweise die Grundlage für eine automatische Kalibrierung geschaffen.

Vorzugsweise werden auf Basis der bestimmten Abweichung der Lage des Überlagerungsmusters auf dem Baufeld von der Referenzlage automatisch oder teilautomatisch modifizierte Steuerbefehle für den Betrieb der Vorrichtung für die Herstellung des herzustellenden Objekts abgeleitet. Dadurch wird beispielsweise eine automatische Korrektur von Abweichungen durchgeführt.

Bei dem erfindungsgemäßen Verfahren gemäß einem weiteren Ausführungsbeispiel handelt es sich um ein Verfahren zum Kalibrieren einer Vorrichtung zum Herstellen eines dreidimensionalen Objekts durch schichtweises Verfestigen von Aufbaumaterial an den dem Querschnitt des herzustellenden Objekts in einer jeweiligen Schicht entsprechenden Stellen, bei dem ein Bestrahlungsmuster ortsaufgelöst erfasst wird. Die Vorrichtung umfasst einen Bauraum, in dem ein Baufeld vorgesehen ist und in dem das Objekt durch selektives Verfestigen des Aufbaumaterials schichtweise aufzubauen ist. Die Vorrichtung umfasst eine Verfestigungseinrichtung zum Ausstrahlen mindestens eines Strahls elektromagnetischer Strahlung oder mindestens eines Teilchenstrahls auf selektive Stellen des Baufeldes. Die Vorrichtung umfasst eine Erfassungseinrichtung mit mindestens einem Strahlungssensor und optional mindestens einem Strahlungsleiter. Als Strahlungssensor kann beispielsweise eine fotosensitive Kamera verwendet werden (in welchem Falle die Erfassungseinrichtung bevorzugt ohne Strahlungsleiter ausgebildet ist) oder eine Fotodiode (in welchem Falle die Erfassungseinrichtung bevorzugt mit Strahlungsleiter ausgebildet ist). Das Verfahren beinhaltet den Schritt des Erzeugens eines Bestrahlungsmusters auf dem Baufeld in einer Schicht des Aufbaumaterials oder auf einem Target. Das Verfahren beinhaltet optional (bei Vorhandensein eines Strahlungsleiters in der Erfassungseinrichtung) den Schritt des Einkoppelns der elektromagnetischen Strahlung, die beim Erzeugen eines Bestrahlungsmusters vom Aufbaumaterial oder vom Target emittiert wird, in den Strahlungsleiter. Das Verfahren beinhaltet den Schritt des Leitens der Strahlung zu dem Strahlungssensor. Das Verfahren beinhaltet den Schritt des Erfassens der Strahlung mit dem Strahlungssensor und den Schritt des Ableitens einer Kalibrierungsinformation auf Basis dieser Erfassung. Dadurch wird beispielsweise ermöglicht, auf Basis ortsaufgelöst erfasster beim Erzeugen eines Bestrahlungsmusters emittierter Strahlung eine Kalibrierung durchzuführen.

Insbesondere ist es möglich, dieses Verfahren mit jedem der vorstehend beschriebenen Verfahren zu kombinieren. Vorzugsweise wird die Kalibrierungsinformation zur automatischen oder teilautomatischen Justage einer Optikeinstellung, insbesondere einer Fokuseinstellung (speziell einer Fokuslageneinstellung), der Verfestigungseinrichtung verwendet. Dadurch können beispielsweise Abweichungen einer Optikeinstellung von der Soll-Einstellung korrigiert werden.

Bei der erfindungsgemäßen Vorrichtung handelt es sich um eine Vorrichtung zum Herstellen eines dreidimensionalen Objekts durch schichtweises Verfestigen von Aufbaumaterial an den dem Querschnitt des herzustellenden Objekts in einer jeweiligen Schicht entsprechenden Stellen. Die Vorrichtung weist einen Bauraum, in dem ein Baufeld vorgesehen ist und in dem das Objekt durch selektives Verfestigen des Aufbaumaterials schichtweise aufzubauen ist, auf. Das Baufeld weist wenigstens einen ersten Teilbereich und einen zweiten Teilbereich, die in einer Überlappungszone überlappen, auf. Die Vorrichtung weist eine Verfestigungseinrichtung zum Ausstrahlen von Strahlen elektromagnetischer Strahlung oder von Teilchenstrahlen auf selektive Stellen des Baufeldes auf. Die Vorrichtung weist eine Erzeugungseinheit, die im Betrieb ein im Wesentlichen periodisches erstes Modulationsmuster in einer Schicht des Aufbaumaterials oder auf einem Target in einem ersten Teilbereich des Baufeldes erzeugt, auf. Die Vorrichtung weist eine Erzeugungseinheit, die im Betrieb ein im Wesentlichen periodisches zweites Modulationsmuster in einer Schicht des Aufbaumaterials oder auf einem Target in einem zweiten Teilbereich des Baufeldes erzeugt, auf. Das erste Modulationsmuster und das zweite Modulationsmuster bilden in der Überlappungszone ein im Wesentlichen periodisches Überlagerungsmuster aus, dessen Periode größer ist als die Periode des ersten Modulationsmusters und die Periode des zweiten Modulationsmusters. Die Vorrichtung weist eine Erfassungseinrichtung auf, die zum Erfassen des Überlagerungsmusters ausgebildet ist. Die Vorrichtung weist eine Bestimmungseinheit, die im Betrieb die Abweichung der Lage des Überlagerungsmusters auf dem Baufeld von einer Referenzlage bestimmt, auf. Dadurch wird beispielsweise eine Vorrichtung bereitgestellt, mit der ein erfindungsgemäßes Verfahren ausgeführt werden kann.

Vorzugsweise weist die Verfestigungsrichtung wenigstens eine erste und eine zweite Ablenkeinrichtung zum Ablenken eines ersten und eines zweiten von der Verfestigungseinrichtung ausgestrahlten Strahls auf, wobei der ersten Ablenkeinrichtung ein erster Teilbereich des Baufeldes zugeordnet ist und der zweiten Ablenkeinrichtung ein zweiter Teilbereich des Baufeldes zugeordnet ist. Dadurch wird es beispielsweise ermöglicht, dass der Wirkbereich eines Strahls auf dem Baufeld so begrenzt wird, dass ein übermäßig schräger Strahleinfall auf das zu verfestigende Material vermieden wird.

Vorzugsweise beinhaltet die Erfassungseinrichtung einen Sensor, der die in der Überlappungszone auftreffende Strahlung durch Detektion der infolge der auftreffenden Strahlung auftretenden vorübergehenden oder dauerhaften Veränderungen einer Eigenschaft des Aufbaumaterials oder des Targets ortsaufgelöst erfasst. Dadurch wird beispielsweise eine Voraussetzung geschaffen, dass das erfindungsgemäße Verfahren mit der Vorrichtung automatisiert durchgeführt werden kann.

Bei der erfindungsgemäßen Kalibriereinheit handelt es sich um eine Kalibriereinheit zum Kalibrieren einer Vorrichtung zum Herstellen eines dreidimensionalen Objekts durch schichtweises Verfestigen von Aufbaumaterial an den dem Querschnitt des herzustellenden Objekts in einer jeweiligen Schicht entsprechenden Stellen, wobei die Kalibriereinheit ein Bestrahlungsmuster ortsaufgelöst erfasst. Die Vorrichtung umfasst einen Bauraum, in dem ein Baufeld vorgesehen ist und in dem das Objekt durch selektives Verfestigen des Aufbaumaterials schichtweise aufzubauen ist. Die Vorrichtung umfasst eine Verfestigungseinrichtung zum Ausstrahlen mindestens eines Strahls elektromagnetischer Strahlung oder mindestens eines Teilchenstrahls auf selektive Stellen des Baufeldes. Die Kalibriereinheit weist eine Erzeugungseinheit, die im Betrieb ein Bestrahlungsmuster auf dem Baufeld in einer Schicht des Aufbaumaterials oder auf einem Target erzeugt, auf. Die Kalibriereinheit weist eine Erfassungseinrichtung mit mindestens einem Strahlungsleiter und mindestens einem Strahlungssensor auf. Der mindestens eine Strahlungsleiter ist dabei ausgebildet, Strahlung zu einem Strahlungssensor zu leiten. Die Kalibriereinheit weist eine Einkopplungseinheit zum Einkoppeln der elektromagnetischen Strahlung, die beim Erzeugen eines Bestrahlungsmusters vom Aufbaumaterial oder vom Target emittiert wird, in den Strahlungsleiter auf. Die Kalibriereinheit weist eine Ableitungseinheit zur Ableitung einer Kalibrierungsinformation auf Basis dieser Erfassung auf. Insbesondere kann die Kalibriereinheit als separate Einheit in der erfindungsgemäßen Vorrichtung zur Herstellung eines dreidimensionalen Objekts verwendet werden.

Weitere Merkmale und Zweckmäßigkeiten der Erfindung ergeben sich aus der Beschreibung von Ausführungsbeispielen unter Bezugnahme auf die beigefügten Zeichnungen.

Fig. 1 ist eine schematische, teilweise im Schnitt dargestellte Ansicht einer Vorrichtung zum Herstellen eines dreidimensionalen Objekts durch schichtweises selektives Verfestigen von Aufbaumaterial gemäß eines Ausführungsbeispiels der Erfindung.

Fig. 2 ist eine schematische Ansicht des ersten Teilbereichs des Baufeldes mit einem ersten Modulationsmuster, des zweiten Teilbereichs des Baufeldes mit einem zweiten Modulationsmuster und der Überlappungszone zwischen dem ersten und dem zweiten Teilbereich mit einem Überlagerungsmuster gemäß einem Ausführungsbeispiel der Erfindung.

Fig. 3 ist eine schematische Ansicht eines Linienmusters gemäß einem weiteren Ausführungsbeispiel der Erfindung.

Fig. 4    ist eine schematische Ansicht eines Linienmusters gemäß einem weiteren Ausführungsbeispiel der Erfindung.

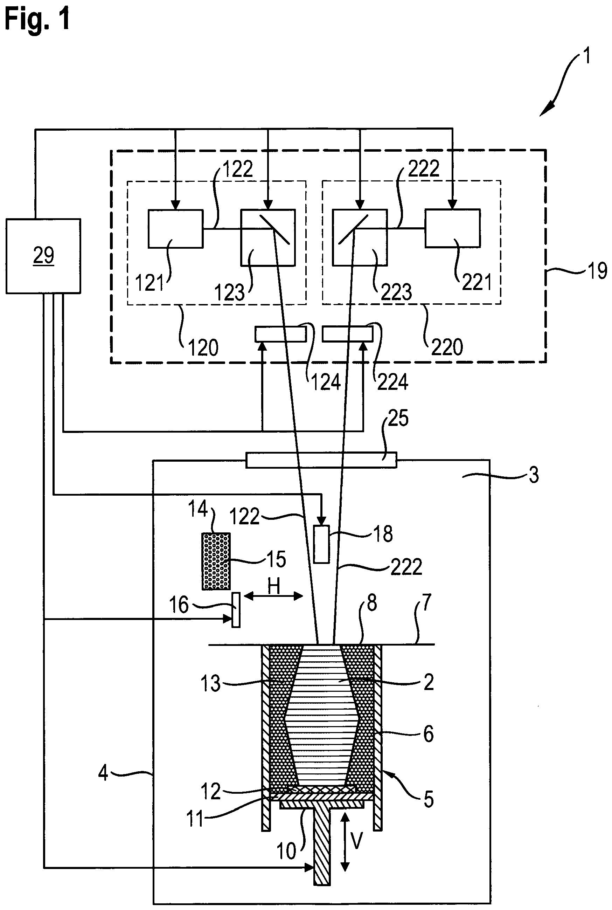

Die in Fig. 1 dargestellte Vorrichtung ist eine Lasersinter- oder Laserschmelzvorrichtung 1 zum Herstellen eines Objekts 2.

Die Vorrichtung 1 enthält eine Prozesskammer 3 mit einer Kammerwandung 4. In der Prozesskammer 3 ist ein nach oben offener Behälter 5 mit einer Wandung 6 angeordnet. In dem Behälter 5 ist ein in einer vertikalen Richtung V bewegbarer Träger 10 angeordnet, an dem eine Grundplatte 11 angebracht ist, die den Behälter nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selbst aufgebaut werden, die dann als Bauplattform dient. In Fig. 1 ist das in dem Behälter 5 auf der Bauplattform zu bildende Objekt 2 unterhalb einer Arbeitsebene 7 in einem Zwischenzustand dargestellt. Es besteht aus mehreren verfestigten Schichten und wird von unverfestigt gebliebenen Aufbaumaterial 13 umgeben.

Die Vorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 auf ein Baufeld 8 in der Arbeitsebene 7. An ihrer Oberseite enthält die Wandung der Prozesskammer 3 ein Einkoppelfenster 25 für die Strahlung zum Verfestigen des Pulvers 15.

Die Vorrichtung 1 enthält ferner eine Verfestigungseinrichtung 19 mit zwei Bestrahlungseinrichtungen 120, 220. Die von den Strahlenquellen 121, 221, beispielsweise Laserquellen, erzeugten Strahlen 122, 222 werden jeweils von einer Ablenkeinrichtung 123, 223 abgelenkt und durch eine der Fokussiereinrichtungen 124, 224 über das Einkoppelfenster 25 auf das Baufeld 8 in der Arbeitsebene 7 fokussiert. Eine Ablenkeinrichtung 123, 223 enthält beispielsweise ein Paar Galvanometerscanner.

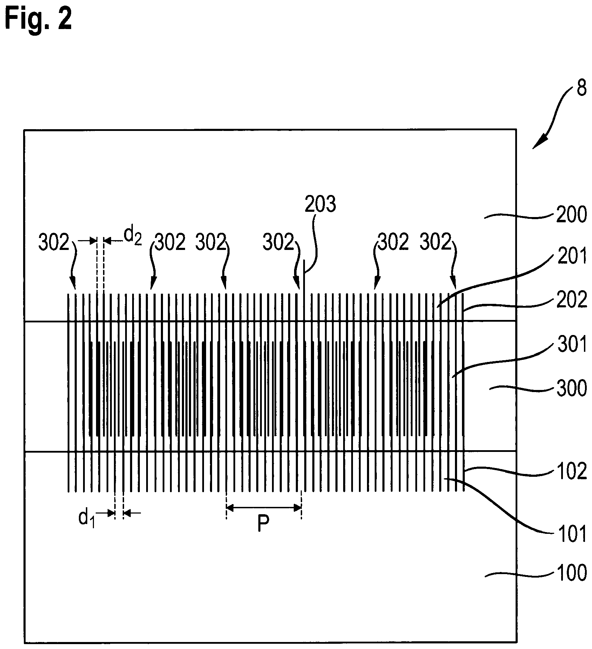

Wie in Fig. 2 gezeigt ist, ist das Baufeld 8 in zwei je einer Ablenkeinrichtung 123, 223 zugeordnete Teilbereiche 100, 200 unterteilt. Jeder der Strahlen 122, 222 wird so von der jeweiligen Ablenkeinrichtung 123, 223 abgelenkt, dass er an selektiven Stellen im jeweiligen Teilbereich 100, 200 des Baufeldes 8 auftrifft. Die Teilbereiche 100, 200 überlappen in der Überlappungszone 300. In der Überlappungszone 300 können beide Strahlen 122, 222 auf das Baufeld auftreffen.

Im Rahmen der Erfindung sind Ausführungsformen möglich, bei denen die Verfestigungseinrichtung 19 eine andere Anzahl an Bestrahlungseinrichtungen, beispielsweise vier Bestrahlungseinrichtungen, enthält. Das Baufeld 8 ist bevorzugt in eine Anzahl an Teilbereichen, die der Anzahl der Bestrahlungseinrichtungen entspricht, unterteilt.

Im Rahmen der Erfindung sind Ausführungsformen möglich, bei denen nicht jede Bestrahlungseinrichtung 120, 220 über eine separate Strahlenquelle verfügt, sondern ein Strahlteiler vorgesehen ist, der einen von einer Strahlenquelle erzeugten Strahl in Teilstrahlen teilt, die in verschiedene Bestrahlungseinrichtungen 120, 220 eingekoppelt werden.

Die Vorrichtung 1 enthält weiter eine Steuereinrichtung 29, über die die einzelnen Bestandteile der Vorrichtung 1 in koordinierter Weise zum Durchführen des Bauprozesses gesteuert werden. Die Steuereinrichtung 29 kann eine CPU enthalten, deren Betrieb durch ein Computerprogramm (Software) gesteuert wird.

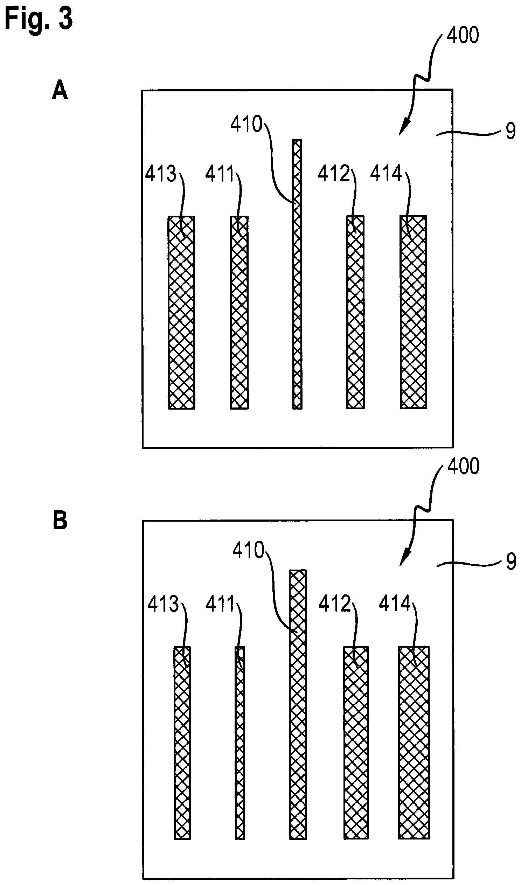

Die Vorrichtung 1 enthält mindestens eine Erzeugungseinheit zum Erzeugen von im Wesentlichen periodischen Modulationsmustern 101, 201 auf einer auf dem Baufeld 8 aufgetragenen Schicht des Aufbaumaterials 15 oder auf einem auf das Baufeld 8 aufgebrachten Target. Es ist bevorzugt, als Erzeugungseinheiten die Bestrahlungseinrichtungen 120, 220 einzusetzen, d.h. die im Wesentlichen periodischen Modulationsmuster 101, 201 mittels der Verfestigungseinrichtung 19 zu erzeugen. Es ist im Rahmen der Erfindung jedoch auch möglich, mindestens eine von der Verfestigungseinrichtung 19 unabhängige Erzeugungseinheit vorzusehen. Die Vorrichtung 1 enthält mindestens eine Erfassungseinrichtung 18 zum Erfassen von auf dem Baufeld erzeugten Belichtungsmustern. Bei der Erfassungseinrichtung 18 handelt es sich beispielsweise um eine bevorzugt im infraroten und/oder sichtbaren Spektralbereich empfindliche Kamera, welche ausgebildet ist, zumindest einen Teil des Baufeldes 8 ortsaufgelöst zu erfassen. Die Kamera kann so ausgebildet sein, dass sie beim Bestrahlen oder in Folge des Bestrahlens vom Aufbaumaterial 15 oder von einem Target (vgl. hierzu Fig. 3) emittierte Strahlung erfasst. Die Kamera kann auch so ausgebildet sein, dass sie eine vorübergehende oder dauerhafte Veränderung des Aufbaumaterials 15 oder des Targets erfasst. Es kann auch vorgesehen sein, dass die Erfassungseinrichtung 18 mindestens einen bevorzugt im infraroten und/oder sichtbaren Spektralbereich empfindlichen Strahlungssensor und mindestens einen Strahlungsleiter aufweist. Bei einem Strahlungsleiter handelt es sich um ein optisches Element oder um eine Kombination mehrerer optischer Elemente, beispielsweise Lichtleiter, Linsen, Spiegel, Prismen und/oder Strahlteiler.

Die Vorrichtung 1 enthält eine Bestimmungseinheit, die auf Basis von von der Erfassungseinheit 18 übermittelten Daten die Abweichung der Lage eines Überlagerungsmusters 301 von einer Referenzlage bestimmt. Vorzugsweise ist die Bestimmungseinheit in die Steuereinheit 29 integriert. Beispielsweise wird die Bestimmungseinheit von einer Programmroutine gebildet, welche von der Steuereinheit 29 zum Bestimmen der Abweichung ausgeführt wird.

Im Betrieb wird die Vorrichtung 1 typischerweise vor dem Herstellen eines dreidimensionalen Objekts 2 kalibriert. Es kann im Rahmen der Erfindung auch vorgesehen sein, dass die Vorrichtung 1 zu einem Zeitpunkt oder zu mehreren Zeitpunkten während der Herstellung eines dreidimensionalen Objekts 2 kalibriert wird. Es kann im Rahmen der Erfindung sogar ein Kalibrieren der Vorrichtung 1 nach dem Herstellen und/oder während des Herstellens eines dreidimensionalen Objekts vorgesehen sein, beispielsweise, um den vorangegangenen Herstellprozess zu überprüfen.

Zum Kalibrieren der Vorrichtung 1 wird mittels der Strahlen 122, 222 in jedem Teilbereich 100, 200 des Baufeldes 8 ein im Wesentlichen periodisches erstes bzw. zweites Modulationsmuster 101, 201 als Bestrahlungsmuster erzeugt, indem die Strahlen 122, 222 in einer Schicht des auf das Baufeld 8 aufgetragenen Aufbaumaterials 15 die Stellen bestrahlen, die dem jeweiligen Modulationsmuster 101, 201 entsprechen. Statt eine Schicht des Aufbaumaterials 15 zu bestrahlen, kann ein Target, das so positioniert ist, dass seine Oberseite im Baufeld 8 liegt, bestrahlt werden. Bei dem Target kann es sich beispielsweise um ein plattenförmiges Stück Metall, beispielsweise aus Stahl bzw. eloxiertem oder lackiertem Aluminium handeln. Die Modulationsmuster 101, 201 sind so auf dem Baufeld positioniert, dass sie in der Überlappungszone ein Überlagerungsmuster 301 bilden.

Die Modulationsmuster 101, 201 sind periodische Muster. Bevorzugt sind die Modulationsmuster 101, 201 Linienmuster, die aus bevorzugt im Wesentlichen gleich breiten, aus belichteten Stellen gebildeten Linien, die in einem im Wesentlichen konstanten Abstand voneinander angeordnet sind, gebildet werden. Der Abstand zwischen zwei benachbarten Linien des ersten Modulationsmusters 101 beträgt $d_1$. Der Abstand zwischen zwei benachbarten Linien des zweiten Modulationsmusters 201 beträgt $d_2$. Die Abstände $d_1$ und $d_2$ sind ähnlich, aber nicht identisch. Die Linien des ersten Modulationsmusters 101 und die Linien des zweiten Modulationsmusters 201 sind im Wesentlichen parallel. Aufgrund des Moir-Effekts bildet sich in der Überlappungszone 300 ein im Wesentlichen periodisches Überlagerungsmuster 301.

In der Fig. 2 sind durch Hell-Dunkel-Kontraste die Modulationsmuster 101, 201 und das Überlagerungsmuster 301 im Überlagerungsbereich 300 schematisch dargestellt. Das Überlagerungsmuster 301 ist charakterisiert durch Maxima und Minima der Linienüberlappung. Die Maxima der Linienüberlappung entsprechen den Zentren der helleren Bereiche entlang des Überlagerungsmusters 301. Die Lage der Maxima der Linienüberlappung in Richtung senkrecht zu den Linien der Linienmuster ("Querrichtung") ist mit Pfeilen 302 gekennzeichnet ist. Das Überlagerungsmuster 301 ist periodisch. Die Periode P entspricht dem Abstand zwischen zwei benachbarten Maxima oder zwei benachbarten Minima der Linienüberlappung. P berechnet sich als:

$$P = d_1 * d_2 / | d_1 - d_2 | ,$$

wobei $|d_1 - d_2|$ den Absolutbetrag des Unterschieds zwischen $d_1$ und $d_2$ bezeichnet.

Wenn das Modulationsmuster 101 räumlich fixiert ist und das Modulationsmuster 201 in Querrichtung um eine Strecke x verschoben wird, verschieben sich im Überlagerungsmuster 301 die Maxima der Linienüberlappung ebenfalls in Querrichtung. Die Verschiebung der Maxima der Linienüberlappung ist dabei aber größer als die Verschiebung des Modulationsmusters 201, sie beträgt

$$x * d_1 / | d_1 - d_2 | ,$$

d.h. die Verschiebung des Modulationsmusters 201 wird durch die Verschiebung des Überlagerungsmusters 301 vergrößert dargestellt. Der Vergrößerungsfaktor beträgt

$$d_1 / | d_1 - d_2 | .$$

Eine Vergrößerung ergibt sich in analoger Weise bei jeder Relativbewegung der Modulationsmuster 101, 201 in Querrichtung.

Durch die Vergrößerung wird die Genauigkeit der Bestimmung der relativen Lage der Modulationsmuster 101, 201 erhöht. Die relative Lage der Modulationsmuster 101, 201 wird bestimmt, indem die Abweichung der Lage des Überlagerungsmusters 301 von einer Referenzlage bestimmt wird.

Es ist bevorzugt, dass die Referenzlage durch eine Referenzmarkierung 203 auf dem Baufeld 8 festgelegt wird, die in einer Schicht des Aufbaumaterials 15 oder auf dem Target erzeugt wird. Der Abstand zwischen einem Maximum der Linienüberlappung und der Referenzmarkierung 203 wird bestimmt, um die Abweichung der Lage des Überlagerungsmusters 301 von der Referenzlage zu bestimmen.

Besonders bevorzugt wird die Referenzmarkierung 203 gemeinsam mit einem der beiden Modulationsmuster 101, 201 erzeugt. In Fig. 2 ist eine Referenzmarkierung 203 dargestellt, die in besonders einfacher und daher bevorzugter Weise als verlängerte Linie des linienmusterförmigen Modulationsmusters 201 erzeugt worden ist.

Es ist ausreichend, wenn von dem im Wesentlichen periodischen Überlagerungsmuster 301 ein Teil einer Periode P auf dem Baufeld 8 vorhanden ist. Es muss lediglich sichergestellt sein, dass das im Wesentlichen periodische Überlagerungsmuster 301 in Querrichtung so breit ist, dass zumindest die Lage eines Maximums oder eines Minimums der Linienüberlappung bestimmt werden kann.

Es ist im Rahmen der Erfindung möglich, mehrere Referenzmarkierungen 203 vorzusehen. Bevorzugt werden die Referenzmarkierungen 203 gemeinsam mit einem der Modulationsmuster 101, 201 oder gemeinsam mit beiden Modulationsmustern 101, 201, besonders bevorzugt in Form verlängerter Linien, erzeugt.

Das Überlagerungsmuster 301 und die mindestens eine Referenzmarkierung 203 werden von der Erfassungseinrichtung 18 ortsaufgelöst erfasst. Die Steuereinrichtung 29 bestimmt aus den von der Erfassungseinrichtung 18 übermittelten Daten die Abweichung des Überlagerungsmusters 301 von einer vorgegebenen Referenzlage.

Wenn die Abweichung einen vorgegebenen Soll-Wert überschreitet, verändert die Steuereinrichtung 29 ein oder mehrere Einstellungen der Bestandteile der Vorrichtung 1, um die Abweichung so zu verändern, dass die Abweichung den vorgegebenen Soll-Wert nicht mehr überschreitet.

Es ist im Rahmen der Erfindung möglich, die Modulationsmuster 101, 201 nicht als Linienmuster auszuführen, sondern als andere Muster, die ein im Wesentlichen periodisches Überlagerungsmuster 301 ausbilden können. Beispielsweise sind Punktmuster oder Gittermuster geeignete Modulationsmuster 101, 201. Mit in mehreren Richtungen im Wesentlichen periodischen Modulationsmustern 101, 201, wie beispielsweise Gittermustern, ist es möglich, als Abweichung der Lage des Überlagerungsmusters 301 von einer Referenzlage einen translatorischen Versatz in einer beliebigen Richtung und/oder eine Drehung zu bestimmen.

Es ist im Rahmen der Erfindung möglich, die Erfassung und Bestimmung der Abweichung der Lage des Überlagerungsmusters 301 von einer Referenzlage durch visuelle Inspektion vorzunehmen. In diesem Fall ist es nicht erforderlich, dass die Vorrichtung 1 eine Erfassungseinrichtung 18 aufweist, da der Bediener beispielsweise den Abstand zwischen einem Maximum der Linienüberlappung und einer Referenzmarkierung 203 visuell bestimmt.

Wenn die Verfestigungseinrichtung 19 mehr als zwei Ablenkeinrichtungen aufweist und sich auf dem Baufeld 8 mehr als zwei jeweils einer Ablenkeinrichtung zugeordnete Teilbereiche befinden, so kann die Kalibrierung in der beschriebenen Weise für jede Überlappungszone zwischen zwei oder mehr Teilbereichen durchgeführt werden.

Es ist im Rahmen der Erfindung möglich, dass zum Kalibrieren der Vorrichtung 1 die Abweichung der Lage des Überlagerungsmusters 301 von einer Referenzlage bestimmt wird und auf Grundlage der bestimmten Abweichung die Steuerbefehle, mittels der die Steuereinrichtung 29 die Elemente der Vorrichtung 1 steuert, modifiziert werden, um Abweichungen der relativen Lage der Teilbereiche des Baufeldes und anderer geometrischer Parameter von den jeweiligen Soll-Werten auszugleichen.

Es ist ferner möglich, elektromagnetische Strahlung, die beim Erzeugen eines Bestrahlungsmusters in einer auf dem Baufeld 8 aufgebrachten Schicht des Aufbaumaterials 15 oder beim Erzeugen eines Bestrahlungsmusters auf einem Target emittiert wird, in einen Strahlungsleiter einzukoppeln, mittels dieses Strahlungsleiters zu einem Strahlungssensor zu leiten sowie mit dem Strahlungssensor zu erfassen und auf Basis der erfassten Strahlung Kalibrierungsinformationen abzuleiten. Auf Grundlage der abgeleiteten Kalibrierinformation wird beispielsweise geprüft, ob eine oder mehrere der Optikeinstellungen (beispielsweise Einstellungen, die die Ablenkung der von der Verfestigungseinrichtung ausgestrahlten Strahlung, deren Fokussierung auf das Baufeld und die Energiedichte eines ausgestrahlten Strahls bestimmen) einer Justage zu unterziehen sind. Eine Justage kann automatisch oder teilautomatisch, also ohne oder mit Mitwirkung des Bedieners, durchgeführt werden.

Über die Bestimmung der Periode P des Überlagerungsmusters 301 ist es möglich, Fehler in den Einstellungen der Verfestigungseinrichtung 19 festzustellen, da ein Vergleich des Ist-Werts mit dem Soll-Wert für die Periode P Aufschluss darüber gibt, ob die Ist-Werte für $d_1$ und $d_2$ den jeweiligen Soll-Werten entsprechen.

Wenn beispielsweise in verschiedenen Bereichen des Überlagerungsmusters 301 nicht derselbe Wert für die Periode P ermittelt wird, gibt dies Aufschluss über eine entsprechende Abweichung in mindestens einem der Modulationsmuster 101, 201. Hierfür können Fehler in den Einstellungen der Verfestigungseinrichtung 19, insbesondere in den Fokussiereinrichtungen 124, 224, sowie in anderen optischen Bauteilen der Vorrichtung 1 verantwortlich sein. Es ist für die Bestimmung der Periode P von Vorteil, wenn das Überlagerungsmuster 301 in Querrichtung möglichst lang ist.

In einem konkreten Ausführungsbeispiel sind die Modulationsmuster 101, 201 Linienmuster mit einer normal zur Richtung der Linien gemessenen Länge von 60 mm. Das Modulationsmuster 101 weist 240 äquidistante Linien auf. Das Modulationsmuster 201 weist 241 äquidistante Linien auf. Die mittlere der Linien des Modulationsmusters 201 ist im Vergleich zu den übrigen Linien länger ausgeführt, wobei die Verlängerung eine außerhalb der Überlappungszone 300 liegende Referenzmarkierung 203 bildet.

In einem anderen konkreten Ausführungsbeispiel wird die Fokussierung der Laserstrahlen 122, 222, die in einer Vorrichtung 1 zum Lasersintern oder Laserschmelzen zum Verfestigen von Aufbaumaterial 15 auf das Baufeld 8 ausgestrahlt werden, überprüft und gegebenenfalls justiert. Überprüfung und gegebenenfalls Justage der Fokussierung werden bevorzugt für jeden Laserstrahl 122, 222 separat durchgeführt. Überprüfung und gegebenenfalls Justage können somit in völlig analoger Weise auch für Vorrichtungen 1, die nur eine Ablenkeinrichtung für einen Laserstrahl aufweisen, und auch für Vorrichtungen 1, die mehr als zwei Ablenkeinrichtungen für jeweils einen Laserstrahl aufweisen, durchgeführt werden. Zur Überprüfung der Fokussierung wird ein plattenförmiges Target 9, das aus eloxiertem Aluminium besteht, auf dem Träger 10 oder der Grundplatte 11 positioniert. Mittels eines der Laser 122, 222 wird auf der Oberseite des Targets 9 ein Linienmuster 400 aus im Wesentlichen parallelen Linien als Bestrahlungsmuster erzeugt. Das in Fig. 3 schematisch dargestellte Linienmuster besteht aus den Linien 410, 411, 412, 413, 414. Das Linienmuster 400 kann wesentlich mehr als fünf Linien aufweisen. Zwischen dem Erzeugen der einzelnen Linien wird der Träger 10 jeweils so in Richtung V bewegt, dass die in Querrichtung aufeinander folgenden Linien 413, 411, 410, 412, 414 bei einer immer weiter angehobenen Stellung des Trägers 10 erzeugt werden. Lediglich beim Erzeugen der mittleren Linie 410, die der einfacheren Identifizierbarkeit halber länger als die anderen Linien ausgeführt wird, befindet sich der Träger in einer derartigen Stellung, dass die Oberseite des Targets 9, auf der das Muster 400 erzeugt wird, in der Arbeitsebene 7 liegt. Je enger gebündelt der Laserstrahl beim Erzeugen einer Linie auf dem Baufeld 8 auftrifft, desto schmäler ist die erzeugte Linie. Die Fokussierung ist richtig eingestellt, wenn die mittlere Linie 410 schmäler ist als die übrigen Linien 413, 411, 412, 414. Diese Situation ist in Fig. 3A dargestellt. In Fig. 3B ist eine Situation dargestellt, in der die Fokussierung nicht richtig eingestellt ist, was daran erkannt werden kann, dass eine von der Mitte entfernte Linie 411 schmäler ist als alle anderen Linien 413, 410, 412, 414. Die elektromagnetische Strahlung, die beim Erzeugen des Musters 400 von den entsprechenden Stellen des Targets 9 emittiert wird, wird zu einem Strahlungssensor geleitet, der die Strahlung detektiert und so das Linienmuster 400 automatisch erfasst. Die Steuereinrichtung 29 stellt automatisch die Breite der Linien 410, 411, 412, 413, 414 fest und bestimmt automatisch, ob die Fokussierung richtig ist. Gegebenenfalls führt die Steuereinrichtung 29 automatisch eine Justage von für die Fokussierung maßgeblichen Elementen der Vorrichtung 1, beispielsweise eine Justage einer der Fokussiereinrichtungen 123, 223, durch. Aus den Linienabständen kann dabei automatisch der notwendige Korrekturbetrag abgeleitet werden.

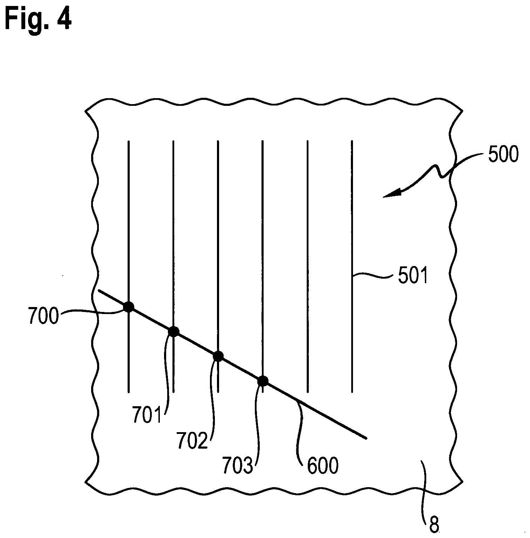

In einem weiteren Ausführungsbeispiel werden Einstellungen der Ablenkeinrichtungen 123, 223 im Zusammenhang mit Schraffurlinien überprüft und gegebenenfalls die Ablenkeinrichtungen 123, 223 justiert. Überprüfung und gegebenenfalls Justage werden bevorzugt für jeden Laserstrahl 122, 222 separat durchgeführt. Überprüfung und gegebenenfalls Justage können somit in völlig analoger Weise auch für Vorrichtungen 1, die nur eine Ablenkeinrichtung für einen Laserstrahl aufweisen, und auch für Vorrichtungen 1, die mehr als zwei Ablenkeinrichtungen für jeweils einen Laserstrahl aufweisen, durchgeführt werden. Schraffurlinien können verwendet werden, um einen flächigen Bereich des Baufeldes 8 zu verfestigen. Schraffurlinien sind parallele von einer Seite des zu verfestigenden flächigen Bereichs zur gegenüberliegenden Seite desselben führende Linien, entlang denen Aufbaumaterial 15 verfestigt wird. Zum Erzeugen von Schraffurlinien wird ein Laserstrahl so bewegt, dass sich die Stelle, an der er auf dem Baufeld 8 auftrifft, zwischen der einen Seite des zu verfestigenden flächigen Bereichs und der gegenüberliegenden Seite hin und her bewegt. Während der Richtungsumkehr kann der Laserstrahl ausgeschaltet werden, um zu verhindern, dass an einer Stelle, an der eine Richtungsumkehr stattfindet, lokal ein unerwünscht hoher Energieeintrag in das Aufbaumaterial erfolgt. Zur Überprüfung, ob die Richtungsumkehr des Laserstrahls jeweils an der richtigen Stelle durchgeführt wird, wird mittels eines der Laser 122, 222 in einer Schicht von auf das Baufeld 8 aufgebrachten Aufbaumaterials 15 ein Linienmuster 500 aus im Wesentlichen parallelen und im Wesentlichen gleich langen Linien 501 als Bestrahlungsmuster erzeugt. Diese Linien 501 werden auf die oben für die Schraffurlinien beschriebene Weise erzeugt, es ist dabei allerdings bevorzugt, dass die Linien 501 voneinander einen Abstand, der größer ist als der übliche Abstand zwischen Schraffurlinien, aufweisen. Weiter wird eine zu den Linien 501 des Linienmusters 500 schräg verlaufende und auf einer Seite des Linienmusters 500 positionierte Linie 600 erzeugt. Ein Teil der Linien 501 schneidet die Linie 600, sodass sich eine Reihe von Schnittpunkten 700, 701, 702, 703 ergibt. Bevorzugt weist die Linie 600 zu den Linien 501 einen Winkel, der nahe bei 90 Grad liegt, auf. Die Schnittpunkte 700, 701, 702, 703 sind sowohl durch visuelle Inspektion als auch durch automatische Erfassung einfacher und genauer zu erfassen als die Länge der Linien 501. Die Lage des letzten Schnittpunktes 703 in der Reihe gibt Aufschluss über die Länge der Linien 501. Dies ist schematisch in Fig. 4 dargestellt. Die elektromagnetische Strahlung, die beim Erzeugen des Linienmusters 500 und der Linie 600 von den entsprechenden Stellen des Baufeldes 8 emittiert wird, wird zu einem Strahlungssensor geleitet, der die Strahlung detektiert und das Belichtungsmuster erfasst. Die Steuereinrichtung 29 stellt automatisch die Lage von zumindest dem letzten Schnittpunkt 703 in der Reihe fest und bestimmt daraus automatisch die Länge der Linien 501 und vergleicht diese mit einem Soll-Wert. Gegebenenfalls führt die Steuereinrichtung 29 automatisch eine Justage durch, beispielsweise eine Justage der Ablenkeinrichtungen 123, 223.

Auch wenn die vorliegende Erfindung anhand von Vorrichtungen 1 zum Lasersintern oder Laserschmelzen beschrieben wurde, ist sie nicht auf das Lasersintern oder Laserschmelzen eingeschränkt. Sie kann auf beliebige Verfahren zum Herstellen eines dreidimensionalen Objekts 2 durch schichtweises Aufbringen und selektives Verfestigen eines Aufbaumaterials 15 angewendet werden.

Die Verfestigungseinrichtung 19 kann beispielsweise einen oder mehrere Gas- oder Festkörperlaser oder jede andere Art von Laser wie z.B. Laserdiode, insbesondere VCSEL (Vertical Cavity Surface Emitting Laser) oder VECSEL (Vertical External Cavity Surface Emitting Laser) oder eine Zeile dieser Laser umfassen. Allgemein kann als Verfestigungseinrichtung 19 jede Einrichtung verwendet werden, mit der Energie als Wellen- oder Teilchenstrahlung selektiv auf eine Schicht des Aufbaumaterials 15 aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial 15 zu verfestigen. Statt des Ablenkens eines Strahls kann auch das Belichten mit einem verfahrbaren Zeilenbelichter durchgeführt werden. Auch auf das selektive Maskensintern, bei dem eine ausgedehnte Lichtquelle und eine Maske verwendet werden, oder auf das High-Speed-Sintern (HSS), bei dem auf dem Aufbaumaterial 15 selektiv ein Material aufgebracht wird, das die Strahlungsabsorption an den dem Querschnitt des Objekts entsprechenden Stellen erhöht (Absorptionssintern) oder verringert (Inhibitationssintern).

Als Aufbaumaterial 15 können verschiedene Arten von Pulver verwendet werden, insbesondere Metallpulver, Kunststoffpulver, Keramikpulver, Sand, gefüllte oder gemischte Pulver. Im Rahmen der Stereolitografie ist auch die Verwendung flüssiger Aufbaumaterialien möglich.

## Patentansprüche

1. Verfahren zum Kalibrieren einer Vorrichtung (1) zum Herstellen eines dreidimensionalen Objekts (2) durch schichtweises Verfestigen von Aufbaumaterial (15) an den dem Querschnitt des herzustellenden Objekts (2) in einer jeweiligen Schicht entsprechenden Stellen mit

   einem Bauraum, in dem ein Baufeld (8) vorgesehen ist und in dem das Objekt (2) durch selektives Verfestigen des Aufbaumaterials (15) schichtweise aufzubauen ist,
   wobei das Baufeld (8) wenigstens einen ersten Teilbereich (100) und einen zweiten Teilbereich (200), die in einer Überlappungszone (300) überlappen, aufweist, und
   einer Verfestigungseinrichtung (19) zum Ausstrahlen von Strahlen (122, 222) elektromagnetischer Strahlung oder von Teilchenstrahlen auf selektive Stellen des Baufeldes (8),
   wobei das Verfahren die folgenden Schritte umfasst:

   Erzeugen eines im Wesentlichen periodischen ersten Modulationsmusters (101) in einer Schicht des Aufbaumaterials (15) oder auf einem Target (9) in einem ersten Teilbereich (100) des Baufeldes (8),
   Erzeugen eines im Wesentlichen periodischen zweiten Modulationsmusters (201) in einer Schicht des Aufbaumaterials (15) oder auf einem Target (9) in einem zweiten Teilbereich (200) des Baufeldes (8),
   wobei das erste Modulationsmuster (101) und das zweite Modulationsmuster (201) in der Überlappungszone (300) ein im Wesentlichen periodisches Überlagerungsmuster (301) ausbilden, dessen Periode größer ist als die Periode des ersten Modulationsmusters (101) und die Periode des zweiten Modulationsmusters (201),
   Erfassen des Überlagerungsmusters (301) und Bestimmen der Abweichung der Lage des Überlagerungsmusters (301) auf dem Baufeld (8) von einer Referenzlage.

2. Verfahren gemäß Anspruch 1, wobei als im Wesentlichen periodische Modulationsmuster (101, 201) Linienmuster, Gittermuster oder Punktmuster erzeugt werden.

3. Verfahren gemäß einem der Ansprüche 1 oder 2, wobei
   die Referenzlage durch mindestens eine Referenzmarkierung (203) auf dem Baufeld festgelegt wird, wobei die mindestens eine Referenzmarkierung (203) in einer Schicht des Aufbaumaterials (15) oder auf einem Target (9) von der Verfestigungseinrichtung (19) erzeugt wird.

4. Verfahren gemäß einem der Ansprüche 1 bis 3, wobei
   die Verfestigungseinrichtung (19) Strahlen (122, 222) elektromagnetischer Strahlung, insbesondere Laserstrahlung, ausstrahlt, wobei verschiedene Strahlen (122, 222) von verschiedenen Strahlungsquellen (121, 221) ausgestrahlt werden oder durch Strahlteilung aus der von einer Strahlungsquelle ausgestrahlten Strahlung erzeugt werden.

5. Verfahren gemäß einem der Ansprüche 1 bis 4, wobei
   die Lage des ersten Modulationsmusters (101) und/oder des zweiten Modulationsmusters (201) auf dem Baufeld (8) derart verändert wird, dass die Abweichung der Lage des Überlagerungsmusters (301) auf dem Baufeld (8) von einer Referenzlage höchstens einen Soll-Wert aufweist.

6. Verfahren gemäß einem der Ansprüche 1 bis 5, wobei
   das Bestimmen der Abweichung der Lage des Überlagerungsmusters (301) auf dem Baufeld (8) von der Referenzlage ein Bestimmen eines Versatzes und/oder einer Drehung umfasst, wobei bevorzugt auf Basis der Bestimmung des Versatzes und/oder der Drehung ein Verändern der Lage des ersten und/oder zweiten Modulationsmusters (101, 201), also ein Verändern des Versatzes und/oder der Drehung, erfolgt.

**7.** Verfahren gemäß einem der Ansprüche 1 bis 6, wobei

das Verfahren vor und/oder während und/oder nach dem Herstellen eines dreidimensionalen Objekts (2) durchgeführt wird.

**8.** Verfahren gemäß einem der Ansprüche 1 bis 7, wobei

die Bestimmung der Abweichung der Lage des Überlagerungsmusters (301) auf dem Baufeld (8) von der Referenzlage eine automatische Erfassung umfasst, insbesondere eine sensorische Erfassung mit einer Erfassungseinrichtung, die mindestens einen Strahlungsleiter und einen Strahlungssensor umfasst.

**9.** Verfahren gemäß einem der Ansprüche 1 bis 8, wobei

auf Basis der bestimmten Abweichung der Lage des Überlagerungsmusters (301) auf dem Baufeld von der Referenzlage automatisch oder teilautomatisch modifizierte Steuerbefehle für den Betrieb der Vorrichtung (1) für die Herstellung des herzustellenden Objekts (2) abgeleitet werden.

**10.** Verfahren gemäß einem der Ansprüche 1 bis 9, bei dem weiter ein Bestrahlungsmuster ortsaufgelöst erfasst wird,

wobei die zu kalibrierende Vorrichtung (1) weiter eine Erfassungseinrichtung mit mindestens einem Strahlungssensor und mindestens einem Strahlungsleiter umfasst,

wobei das Verfahren folgende Schritte umfasst:

Erzeugen eines Bestrahlungsmusters auf dem Baufeld (8) in einer Schicht des Aufbaumaterials (15) oder auf einem Target (9),
Einkoppeln der elektromagnetischen Strahlung, die beim Erzeugen eines Bestrahlungsmusters vom Aufbaumaterial (15) oder vom Target (9) emittiert wird, in den Strahlungsleiter,
Leiten der Strahlung zu dem Strahlungssensor und
Erfassen der Strahlung mit dem Strahlungssensor und
Ableiten einer Kalibrierungsinformation auf Basis dieser Erfassung.

**11.** Verfahren gemäß Anspruch 10, wobei

die Kalibrierungsinformation zur automatischen oder teilautomatischen Justage einer Optikeinstellung, insbesondere einer Fokuseinstellung, der Verfestigungseinrichtung (19) verwendet wird.

**12.** Vorrichtung zum Herstellen eines dreidimensionalen Objekts (2) durch schichtweises Verfestigen von Aufbaumaterial (15) an den dem Querschnitt des herzustellenden Objekts (2) in einer jeweiligen Schicht entsprechenden Stellen mit

einem Bauraum, in dem ein Baufeld (8) vorgesehen ist und in dem das Objekt (2) durch selektives Verfestigen des Aufbaumaterials (15) schichtweise aufzubauen ist,
wobei das Baufeld (8) wenigstens einen ersten Teilbereich (100) und einen zweiten Teilbereich (200), die in einer Überlappungszone (300) überlappen, aufweist,
einer Verfestigungseinrichtung (19) zum Ausstrahlen von Strahlen (122, 222) elektromagnetischer Strahlung oder von Teilchenstrahlen auf selektive Stellen des Baufeldes (8),
einer Erzeugungseinheit, die im Betrieb ein im Wesentlichen periodisches erstes Modulationsmuster (101) in einer Schicht des Aufbaumaterials (15) oder auf einem Target (9) in einem ersten Teilbereich (100) des Baufeldes erzeugt,
einer eine Erzeugungseinheit, die im Betrieb ein im Wesentlichen periodisches zweites Modulationsmuster (201) in einer Schicht des Aufbaumaterials (15) oder auf einem Target (9) in einem zweiten Teilbereich (200) des Baufeldes erzeugt,
wobei das erste Modulationsmuster (101) und das zweite Modulationsmuster (201) in der Überlappungszone (300) ein im Wesentlichen periodisches Überlagerungsmuster (301) ausbilden, dessen Periode größer ist als die Periode des ersten Modulationsmusters (101) und die Periode des zweiten Modulationsmusters (201),
einer Erfassungseinrichtung, ausgebildet zum Erfassen des Überlagerungsmusters (301), und
einer eine Bestimmungseinheit, die im Betrieb die Abweichung der Lage des Überlagerungsmusters (301) auf dem Baufeld (8) von einer Referenzlage bestimmt.

**13.** Vorrichtung gemäß Anspruch 12, wobei

die Verfestigungseinrichtung (19) wenigstens eine erste Ablenkeinrichtung (123) und eine zweite Ablenkeinrichtung (223) zum Ablenken eines ersten und eines zweiten von der Verfestigungseinrichtung ausgestrahlten Strahls (122, 222) aufweist,
wobei der ersten Ablenkeinrichtung (123) ein erster Teilbereich (100) des Baufeldes (8) zugeordnet ist und der zweiten Ablenkeinrichtung (223) ein zweiter Teilbereich (200) des Baufeldes (8) zugeordnet ist.

**14.** Vorrichtung gemäß einem der Ansprüche 12 bis 13, wobei

die Erfassungseinrichtung einen Sensor beinhaltet, der die in der Überlappungszone (300) auftreffende Strahlung durch Detektion der infolge der auftreffenden Strahlung auftretenden vorübergehenden oder dauerhaften Veränderungen einer Eigenschaft des Aufbaumaterials (15) oder des Targets (9) ortsaufgelöst erfasst.

## Claims

1. Method for calibrating an apparatus (1) for manufacturing a three-dimensional object (2) by layer-wise solidification of building material (15) at the positions corresponding to the cross-section of the object (2) to be manufactured in a respective layer with a build space, in which a build area (8) is provided and in which the object (2) is to be built layer by layer by means of selectively solidifying the building material (15), wherein the build area (8) comprises at least a first sub-area (100) and a second sub-area (200), which overlap in an overlap zone (300), and a solidification device (19) for emitting beams (122, 222) of electromagnetic radiation or particle beams to selective positions of the build area (8), wherein the method comprises the following steps:

   generating a substantially periodic first modulation pattern (101) in a layer of the building material (15) or on a target (9) in a first sub-area (100) of the build area (8),
   generating a substantially periodic second modulation pattern (201) in a layer of the building material (15) or on a target (9) in a second sub-area (200) of the build area (8),
   wherein in the overlap zone (300), the first modulation pattern (101) and the second modulation pattern (201) form a substantially periodic superposition pattern (301), whose period is larger than the period of the first modulation pattern (101) and the period of the second modulation pattern (201),
   detecting the superposition pattern (301), and determining the deviation of the position of the superposition pattern (301) on the build area (8) from a reference position.

2. Method according to claim 1, wherein line patterns, grid patterns or dot patterns are generated as substantially periodic modulation patterns (101, 201).

3. Method according to any of claims 1 or 2, wherein the reference position is defined by at least one reference mark (203) on the build area, wherein the at least one reference mark (203) is generated by the solidification device (19) in a layer of the building material (15) or on a target (9).

4. Method according to any of claims 1 to 3, wherein the solidification device (19) emits beams (122, 222) of electromagnetic radiation, in particular laser radiation, wherein different beams (122, 222) are emitted from different radiation sources (121, 221) or are generated from the radiation emitted from one radiation source by means of beam splitting.

5. Method according to any of claims 1 to 4, wherein the position of the first modulation pattern (101) and/or the second modulation pattern (201) on the build area (8) is changed such that the deviation of the position of the superposition pattern (301) on the build area (8) from a reference position has a value not exceeding a setpoint value.

6. Method according to any of claims 1 to 5, wherein the determination of the deviation of the position of the superposition pattern (301) on the build area (8) from the reference position comprises determining a displacement and/or a rotation, wherein preferably on the basis of the determination of the displacement and/or rotation, a change of the position of the first and/or second modulation pattern (101, 201), i.e., a change of the displacement and/or the rotation, is carried out.

7. Method according to any of claims 1 to 6, wherein the method is executed prior to and/or during and/or after the manufacturing a three-dimensional object (2).

8. Method according to any of claims 1 to 7, wherein the determination of the deviation of the position of the superposition pattern (301) on the build area (8) from the reference position comprises an automatic detection, in particular a sensor-based detection with a detection device, which comprises at least one radiation conductor and at least one radiation sensor.

9. Method according to any of claims 1 to 8, wherein modified control commands for the operation of the apparatus (1) for the manufacture of the object (2) to be manufactured are derived on the basis of the determined deviation of the position of the superposition pattern (301) on the build area from the reference position in an automatic or semi-automatic way.

10. Method according to one of claims 1 to 9, in which method furthermore an irradiation pattern is detected in a spatially resolved manner, wherein the apparatus (1) to be calibrated further comprises a detection device with at least one radiation sensor and at least one radiation conductor, the method comprising the following steps:

    generating an irradiation pattern on the build area (8) in a layer of the building material (15) or on a target (9),
    coupling the electromagnetic radiation which is emitted from the building material (15) or the target (9) when generating an irradiation pattern into the radiation conductor,
    conducting the radiation to the radiation sensor, and
    detecting the radiation by the radiation sensor, and

deriving a calibration information on the basis of this detection.

11. Method according to claim 10, wherein the calibration information is used for the automatic or semi-automatic adjustment of an optical setting of the solidification device (19), in particular a focus setting.

12. Apparatus for manufacturing a three-dimensional object (2) by layer-wise solidification of a building material (15) at the positions corresponding to the cross-section of the object (2) to be manufactured in a respective layer with

a build space, in which a build area (8) is provided and in which the object (2) is to be built in a layer-wise manner by selectively solidifying the building material (15),

wherein the build area (8) comprises at least a first sub-area (100) and a second sub-area (200), which overlap in an overlap zone (300),

a solidification device (19) for emitting beams (122, 222) of electromagnetic radiation or particle beams to selective positions of the build area (8),

a generation unit, which generates a substantially periodic first modulation pattern (101) in a layer of the building material (15) or on a target (9) in a first sub-area (100) of the build area during operation,

a generation unit, which generates a substantially periodic second modulation pattern (201) in a layer of the building material (15) or on a target (9) in a second sub-area (200) of the build area during operation,

wherein in the overlap zone (300), the first modulation pattern (101) and the second modulation pattern (201) form a substantially periodic superposition pattern (301), whose period is larger than the period of the first modulation pattern (101) and the period of the second modulation pattern (201),

a detection device which is configured for detecting the superposition pattern (301), and

a determination unit, which, during operation, determines the deviation of the position of the superposition pattern (301) on the build area (8) from a reference position.

13. Apparatus according to claim 12, wherein the solidification device (19) comprises at least a first deflecting device (123) and a second deflecting device (223) for deflecting a first and a second beam (122, 222) emitted from the solidification device,

wherein a first sub-area (100) of the build area (8) is assigned to the first deflecting device (123) and a second sub-area (200) of the build area (8) is assigned to the second deflecting device (223).

14. Apparatus according to one of claims 12 to 13, wherein the detection device comprises a sensor, which detects the radiation impinging on the overlap zone (300) in a spatially resolved manner by detection of the temporary or permanent changes of a property of the building material (15) or the target (9) occurring in consequence of the incident radiation.

## Revendications

1. Procédé pour étalonner un dispositif (1) de fabrication d'un objet (2) tridimensionnel par solidification couche par couche de matériau constitutif (15) aux endroits correspondant à la section transversale de l'objet (2) à fabriquer dans une couche respective avec

un espace de construction, dans lequel un champ de construction (8) est prévu et dans lequel l'objet (2) est à constituer couche par couche par solidification sélective du matériau constitutif (15),

dans lequel le champ de construction (8) présente au moins une première partie (100) et une deuxième partie (200), qui se superposent dans une zone de superposition (300), et

un appareil de solidification (19) destiné à émettre des faisceaux (122, 222) de rayonnement électromagnétique ou des faisceaux de particules sur des endroits sélectifs du champ de construction (8),

dans lequel le procédé comprend les étapes suivantes :

la production d'un premier modèle de modulation (101) sensiblement périodique dans une couche du matériau constitutif (15) ou sur une cible (9) dans une première partie (100) du champ de construction (8),

la production d'un deuxième modèle de modulation (201) sensiblement périodique dans une couche du matériau constitutif (15) ou sur une cible (9) dans une deuxième partie (200) du champ de construction (8),

dans lequel le premier modèle de modulation (101) et le deuxième modèle de modulation (201) réalisent dans la zone de superposition (300) un modèle de superposition (301) sensiblement périodique, dont la période est plus grande que la période du premier modèle de modulation (101) et la période du deuxième modèle de modulation (201),

l'enregistrement du modèle de superposition (301) et

la détermination de l'écart entre la position du modèle de superposition (301) sur le champ de construction (8) et une position de référence.

2. Procédé selon la revendication 1, dans lequel

des modèles de lignes, des modèles de treillis ou des modèles de points sont produits en tant que modèles de modulation (101, 201) sensiblement périodiques.

3. Procédé selon l'une quelconque des revendications 1 ou 2,
dans lequel
la position de référence est définie par au moins un marquage de référence (203) sur le champ de construction, dans lequel l'au moins un marquage de référence (203) est produit par l'appareil de solidification (19) dans une couche du matériau constitutif (15) ou sur une cible (9).

4. Procédé selon l'une quelconque des revendications 1 à 3,
dans lequel l'appareil de solidification (19) émet des faisceaux (122, 222) de rayonnement électromagnétique, en particulier de rayonnement laser, dans lequel différents faisceaux (122, 222) de différentes sources de rayonnement (121, 221) sont émis ou sont produits par division de faisceau à partir du rayonnement émis par une source de rayonnement.

5. Procédé selon l'une quelconque des revendications 1 à 4,
dans lequel
la position du premier modèle de modulation (101) et/ou du deuxième modèle de modulation (201) sur le champ de construction (8) est modifiée de telle sorte que l'écart entre la position du modèle de superposition (301) sur le champ de construction (8) et une position de référence présente au plus une valeur théorique.

6. Procédé selon l'une quelconque des revendications 1 à 5,
dans lequel
la détermination de l'écart entre la position du modèle de superposition (301) sur le champ de construction (8) et la position de référence comprend une détermination d'un décalage et/ou d'une rotation, dans lequel une modification de la position du premier et/ou deuxième modèle de modulation (101, 201), par conséquent une modification du décalage et/ou de la rotation, s'effectue de préférence sur la base de la détermination du décalage et/ou de la rotation.

7. Procédé selon l'une quelconque des revendications 1 à 6,
dans lequel
le procédé est mis en œuvre avant et/ou pendant et/ou après la fabrication d'un objet (2) tridimensionnel.

8. Procédé selon l'une quelconque des revendications 1 à 7,
dans lequel

la détermination de l'écart entre la position du modèle de superposition (301) sur le champ de construction (8) et la position de référence comprend un enregistrement automatique, en particulier un enregistrement par capteur avec un appareil d'enregistrement, qui comprend au moins un conducteur de rayonnement et un capteur de rayonnement.

9. Procédé selon l'une quelconque des revendications 1 à 8,
dans lequel
des instructions de commande modifiées de manière automatique ou semi-automatique pour le fonctionnement du dispositif (1) pour la fabrication de l'objet (2) à fabriquer sont déduites sur la base de l'écart déterminé entre la position du modèle de superposition (301) sur le champ de construction et la position de référence.

10. Procédé selon l'une quelconque des revendications 1 à 9, selon lequel un modèle de rayonnement est enregistré avec résolution spatiale,
dans lequel le dispositif (1) à étalonner comprend en outre un appareil d'enregistrement avec au moins un capteur de rayonnement et au moins un conducteur de rayonnement,
dans lequel le procédé comprend les étapes suivantes :

la production d'un modèle de rayonnement sur le champ de construction (8) dans une couche du matériau constitutif (15) ou sur une cible (9),
l'injection du rayonnement électromagnétique, qui est émis lors de la production d'un modèle de rayonnement du matériau constitutif (15) ou de la cible (9), dans le conducteur de rayonnement,
le guidage du rayonnement vers le capteur de rayonnement et
l'enregistrement du rayonnement avec le capteur de rayonnement et
la déduction d'une information d'étalonnage sur la base de cet enregistrement.

11. Procédé selon la revendication 10,
dans lequel
l'information d'étalonnage est utilisée pour l'ajustement automatique ou en partie automatique d'un réglage optique, en particulier d'un réglage focal, de l'appareil de solidification (19).

12. Dispositif pour fabriquer un objet (2) tridimensionnel par solidification couche par couche de matériau constitutif (15) aux endroits correspondant à la section transversale de l'objet (2) à fabriquer dans une couche respective avec
un espace de construction, dans lequel un champ de construction (8) est prévu et dans lequel l'objet (2) est à constituer couche par couche par solidification sélective du matériau constitutif (15),

dans lequel le champ de construction (8) présente au moins une première partie (100) et une deuxième partie (200), qui se superposent dans une zone de superposition (300),

un appareil de solidification (19) destiné à émettre des faisceaux (122, 222) de rayonnement électromagnétique ou des faisceaux de particules sur des endroits sélectifs du champ de construction (8),

une unité de production, qui, lors du fonctionnement, produit un premier modèle de modulation (101) sensiblement périodique dans une couche du matériau constitutif (15) ou sur une cible (9) dans une première partie (100) du champ de construction,

une unité de production, qui, lors du fonctionnement, produit un deuxième modèle de modulation (201) sensiblement périodique dans une couche du matériau constitutif (15) ou sur une cible (9) dans une deuxième partie (200) du champ de construction,

dans lequel le premier modèle de modulation (101) et le deuxième modèle de modulation (201) réalisent dans la zone de superposition (300) un modèle de superposition (301) sensiblement périodique, dont la période est plus grande que la période du premier modèle de modulation (101) et la période du deuxième modèle de modulation (201),

un appareil d'enregistrement, réalisé pour l'enregistrement du modèle de superposition (301), et

une unité de détermination, qui, lors du fonctionnement, détermine l'écart entre la position du modèle de superposition (301) sur le champ de construction (8) et une position de référence.

13. Dispositif selon la revendication 12, dans lequel

l'appareil de solidification (19) présente au moins un premier appareil de déviation (123) et un deuxième appareil de déviation (223) destinés à dévier un premier et un deuxième faisceau (122, 222) émis par l'appareil de solidification,

dans lequel une première partie (100) du champ de construction (8) est associée au premier appareil de déviation (123) et une deuxième partie (200) du champ de construction (8) est associée au deuxième appareil de déviation (223).

14. Dispositif selon l'une quelconque des revendications 12 à 13, dans lequel

l'appareil d'enregistrement contient un capteur, qui enregistre avec résolution spatiale le rayonnement incident dans la zone de superposition (300) par détection des modifications temporaires ou durables, survenant à la suite du rayonnement incident, d'une propriété du matériau constitutif (15) ou de la cible (9).

# Fig. 1

## Fig. 2

# Fig. 3

A

B

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19514740 C1
- DE 19918613 A1
- DE 102013208651 A1
- WO 2015040433 A2